# EUROPÄISCHE PATENTSCHRIFT

(11) **EP 2 652 466 B1**
(45) Veröffentlichungstag und Bekanntmachung des Hinweises auf die Patenterteilung: **20.02.2019**
(21) Anmeldenummer: 11791004.2
(22) Anmeldetag: 06.12.2011
(51) Int. Cl.: G01H 11/06, B06B 1/02

(54) **SCHALLBASIERTER SENSOR ZUR UMFELDDETEKTION UND VERWENDUNG DESSELBEN**
SOUND BASED SENSOR FOR DETECTING SURROUNDINGS AND USE OF THE SAME
CAPTEUR SONORE DESTINÉ À LA DÉTECTION DE CHAMP PÉRIPHÉRIQUE ET UTILISATION DUDIT CAPTEUR

(30) Priorität: 17.12.2010 DE 102010063438
(43) Veröffentlichungstag der Anmeldung: 23.10.2013
(73) Patentinhaber: Robert Bosch GmbH, 70442 Stuttgart (DE)
(72) Erfinder: STROBEL, Jens, 71638 Ludwigsburg (DE); GERLACH, Andre, 71229 Leonberg-Hoefingen (DE)
(86) Internationale Anmeldenummer: PCT/EP2011/071957
(87) Internationale Veröffentlichungsnummer: WO 2012/080042

(56) Entgegenhaltungen:
- EP-A1- 2 030 698
- WO-A1-2008/135004
- DE-A1-102005 059 907
- US-A1- 2007 127 746

## Beschreibung

### Stand der Technik

Die Erfindung bezieht sich auf einen schallwellenbasierten Sensor zur Umfelddetektion, insbesondere auf einen Ultraschallsensor für Kfz-Anwendungen, auf ein Kraftfahrzeug diesen enthaltend und auf die Verwendung desselben nach dem Oberbegriff der unabhängigen Patentansprüche.

Im Anwendungsbereich einer ultraschallbasierten Umfelddetektion wird beispielsweise von einem Schallwandler Schall oberhalb des Audiofrequenzbereiches in die Umgebung abgegeben, von entsprechenden Objekten in der Umgebung reflektiert und von geeigneten Schallempfängern registriert. Ziel dieser Umfelddetektion ist beispielsweise die Vermeidung von Kollisionen mit Umgebungsobjekten und das Ermitteln von Umgebungskarten, beispielsweise im Rahmen der Bahnplanung für Kraftfahrzeuge.

Üblicherweise werden dazu Systeme eingesetzt, die einen oder mehrere Sensoren umfassen, die jeweils einen einzelnen Schallwandler als Ultraschallsender bzw. -empfänger umfassen. Bekannt sind zu diesem Zweck Ultraschallwandler, die beispielsweise auf Basis von Piezoelementen ausgeführt sind, aber auch elektrostatische Wandler, die aus einer Anordnung von zwei mit kleinem Abstand gegenüberliegenden Kondensatorplatten bestehen und gegebenenfalls im Rahmen von Halbleiterprozessen als MEMS-Wandler ausgeführt sind. Derartige Sensoren sind beispielsweise Gegenstand der DE 10 2006 021 492.

Weiterhin ist aus dem Artikel V. Ovtun, J. Döring, J. Bartusch, U. Beck, A. Erhard und Y. Yakymenko "Ferroelektret non-contact ultrasonic transducers" Appl. Phys.

A 88, 737-743 (2007) die Verwendung von Ferroelektret-Materialien in Ultraschallsensoren bekannt. Diese finden Anwendung im industriellen und medizinischen Bereich sowie im Bereich der Materialwissenschaften und im Bereich der nicht zerstörenden Prüfungsmethoden. WO 2008/135004 A1 offenbart einen ähnlichen Ultraschallsensor.

### Offenbarung der Erfindung

Aufgabe der vorliegenden Erfindung ist es, schallwellenbasierte Sensorsysteme zur Umfelddetektion bereitzustellen, die hinsichtlich einer sicheren Erfassung von Umfeldobjekten optimiert sind. Dabei wird unter einem schallwellenbasierten Sensor ein Sensor verstanden, der Schallwellen zumindest detektiert und in einer in ein Messsignal überführbaren Form verarbeitet oder weiterleitet.

### Vorteile der Erfindung

Ein schallbasierter Sensor mit den kennzeichnenden Merkmalen des Anspruchs 1 löst in vorteilhafter Weise die der Erfindung zu Grunde liegende Aufgabe. Dabei umfasst der schallwellenbasierte Sensor mindestens zwei Schallwandler, die in einem Abstand von weniger als der halben Wellenlänge der erzeugten bzw. der detektierten Schallwellen zueinander positioniert sind. Eine derart ausgeführte Array-Anordnung von Schallwandlern ermöglicht eine genaue Erfassung der Richtung und Entfernung mehrerer Umfeldobjekte auf einfache Weise. Eine solche Array-Anordnung ist daher besonders vorteilhaft im Bereich komplexer Umgebungsprofile, die mehrere zu detektierende Objekte aufweisen.

Weitere vorteilhafte Ausführungsformen der vorliegenden Erfindung sind Gegenstand der Unteransprüche.

So ist es von Vorteil, wenn die Schallwandler des schallwellenbasierten Sensors zueinander parallel ausgerichtet sind. Auf diese Weise ist eine stereoskopische Erfassung von Umfeldobjekten möglich.

Weiterhin ist von Vorteil, wenn die schallerzeugende Membran mindestens eines der Schallwandler aus einem Ferroelektret-Material gefertigt ist oder dieses zumindest aufweist. Der besondere Vorteil der Verwendung von Ferroelektret-Materialien als Bestandteil der schallwellenerzeugenden Membran des Schallwandlers ist in deren Robustheit und in deren kostengünstiger Herstellung zu sehen.

Darüber hinaus ist von Vorteil, wenn das Ferroelektret-Material als Folie ausgeführt ist, die mit Elektroden versehen ist, wobei mindestens eine der Elektroden in Form einer aufgedampften Metallisierung ausgeführt ist. Die Ausführung einer der Elektroden als aufgedampfte Metallisierung führt zu sehr dünnen und biegsamen Elektrodenstrukturen, die eine Vielzahl von Oberflächengestaltungen der Schallwellen erzeugenden Membran zulassen.

Gemäß einer besonders vorteilhaften Ausführungsform weisen mindestens zwei Schallwandler des schallwellenbasierten Sensors eine gemeinsame Elektrode auf. Vorteil dieser Ausführungsform ist, dass auf einfache und kostengünstige Weise Array-Strukturen mit einer Vielzahl von Schallwandlern erzeugt werden können.

Der erfindungsgemäße schallwellenbasierte Sensor lässt sich in vorteilhafter Weise in Kraftfahrzeugen zur Umfelddetektion, beispielsweise bei Einparkvorgängen oder bei sonstigen Manövriervorgängen mit langsamer Geschwindigkeit, beispielsweise in Parkhäusern, einsetzen. Weitere vorteilhafte Anwendungsfelder sind in der Umfelderfassung bei Robotern, bei GebäudeÜberwachungssystemen, insbesondere bei der Überwachung von Räumen, sowie bei der Überwachung von industriellen Fertigungsanlagen und im Rahmen von Vorrichtungen zur Unterstützung sehbehinderter Personen zu sehen.

### Kurze Beschreibung der Zeichnungen

Ausführungsbeispiele der Erfindung sind in der Zeichnung dargestellt und in der nachfolgenden Beschreibung näher erläutert. So zeigen:
- die Figuren 1a bis 1d: schematische Schnittdarstellungen mehrerer Varianten eines in Array-Form ausgeführten Sensors gemäß einer ersten Ausführungsform der vorliegenden Erfindung,
- die Figuren 2a bis 2h: schematische Aufsichten mehrerer Varianten eines aus einer Vielzahl von Arrays ausgeführten Sensors gemäß einer zweiten Ausführungsform der vorliegenden Erfindung und
- Figur 3: die schematische Darstellung eines Kraftfahrzeugs, die erfindungsgemäßen Sensoren enthaltend.

### Ausführungsformen der Erfindung

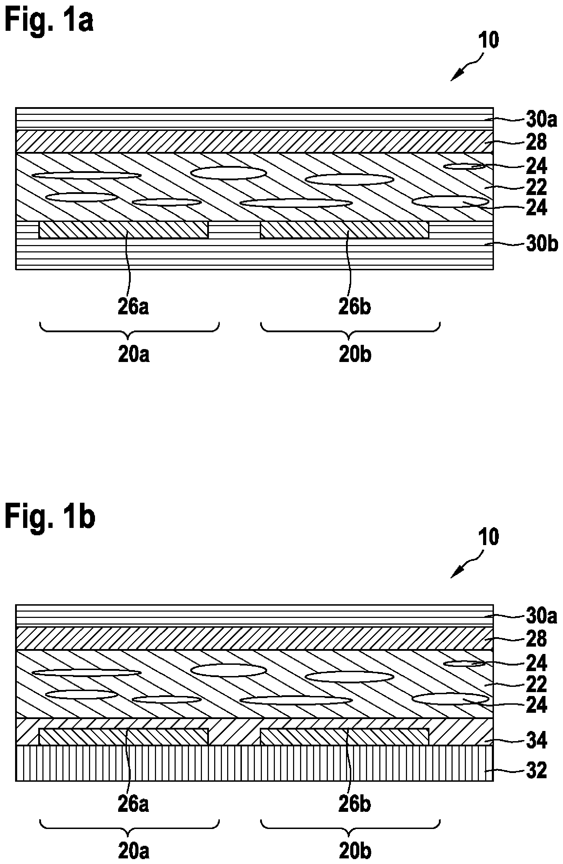

In den Figuren 1a bis 1d sind unterschiedliche Ausführungsvarianten eines schallwellenbasierten Sensors 10 dargestellt. Dieser umfasst mindestens zwei Schallwandler 20a, 20b mit einer insbesondere gemeinsamen Membran 22 zur Schallerzeugung bzw. Schalldetektion. Dabei ist die Membran 22 vorzugsweise als Folie ausgestaltet, die aus einem Ferroelektret-Material ausgeführt ist oder dieses zumindest enthält.

Ferroelektret-Materialien, die auch als Elektret-Material oder als electromechanical film bezeichnet werden, sind gekennzeichnet durch eine Porenstruktur 24, an deren Grenzfläche elektrostatisch positive und negative Ladungen lokalisiert und permanent gespeichert sind. Geeignete Ferroelektret-Materialien sind beispielsweise auf der Basis von Polymeren wie Polytetrafluorethylen, Polytetrafluorethylenpropylen, Polyethylenterephthalat, Polyvinylidenfluorid bzw. aus Copolymeren derselben hergestellt.

Zur Anregung der schallwellenerzeugenden bzw. -detektierenden Membran 22 sind beispielsweise auf einer ersten Großfläche der Membran 22 erste Sensorelektroden 26a, 26b vorgesehen, die jeweils mit einer gemeinsamen zweiten Sensorelektrode 28, die als Masseelektrode fungiert, einen ersten und einen zweiten Schallwandler 20a, 20b bilden. Gemäß einer alternativen Ausführungsform kann jeder der Schallwandler 20a, 20b auch eine separate zweite Sensorelektrode 28 aufweisen. Dabei sind die Schallwandler 20a, 20b in einem Abstand von weniger als der halben Wellenlänge der erzeugten bzw. der detektierten Schallwellen zueinander positioniert.

Gemäß der in Figur 1a dargestellten ersten Ausführungsvariante eines erfindungsgemäßen schallwellenbasierten Sensors 10 sind die ersten und zweiten Sensorelektroden 26a, 26b, 28 als Metallisierungsschichten auf der Membran 22 vorgesehen. Diese werden vorzugsweise durch geeignete chemische oder auf CVD- bzw. PVD-basierenden Verfahren beruhende Metallisierungsvorgänge erzeugt.

Zum Schutz vor äußeren Umwelteinflüssen ist vorzugsweise auf beiden Großflächen der aus der Membran 22 bzw. ersten und zweiten Sensorelektroden 26a, 26b, 28 bestehenden Schallwandler 20a, 20b eine Schutzschicht 30a, 30b vorgesehen, die die schallerzeugenden Kompartimente der Schallwandler 20a, 20b vor Umwelteinflüssen wie Feuchtigkeit, Staub, Sprühnebel, Eis und Schnee bzw. vor mechanischer Einwirkung schützt und die die Beständigkeit beispielsweise bei Montage der Sensoren im Außenbereich verbessert.

Die Schallwandler 20a, 20b erzeugen insbesondere Schallwellen im Ultraschallbereich zwischen 16kHz und 300kHz. Besonders geeignet hat sich dabei ein Frequenzbereich um 50kHz gezeigt.

Eine zweite Ausführungsvariante eines schallwellenbasierten Sensors ist in Figur 1b dargestellt. Dabei bezeichnen gleiche Bezugszeichen gleiche Sensorkomponenten wie in Figur 1a.

Im Unterschied zu der in Figur 1a dargestellten Ausführungsvariante weist die Ausführungsform gemäß Fig. 1b nur eine Schutzfolie 30a auf. Der aus der Membran 22, den ersten und zweiten Sensorelektroden 26a, 26b, 28 und der Schutzfolie 30a gebildete Verbund ist auf einem Träger 32, der beispielsweise in Form einer Leiterplatte ausgeführt ist, positioniert. Der besondere Vorteil der Verwendung einer Leiterplatte als Träger 32 besteht darin, dass die ersten Sensorelektroden 26a, 26b beispielsweise in Form einer Elektrodenstruktur der als Träger 32 fungierenden Leiterplatte vorgefertigt werden können. Diese werden bspw. nachträglich mit einem insbesondere vorgefertigten Verbund aus Membran 22, zweiter Sensorelektrode 28 und Schutzschicht 30a mittels einer Kleberschicht 34 verklebt unter Ausbildung der Schallwandler 20a, 20b.

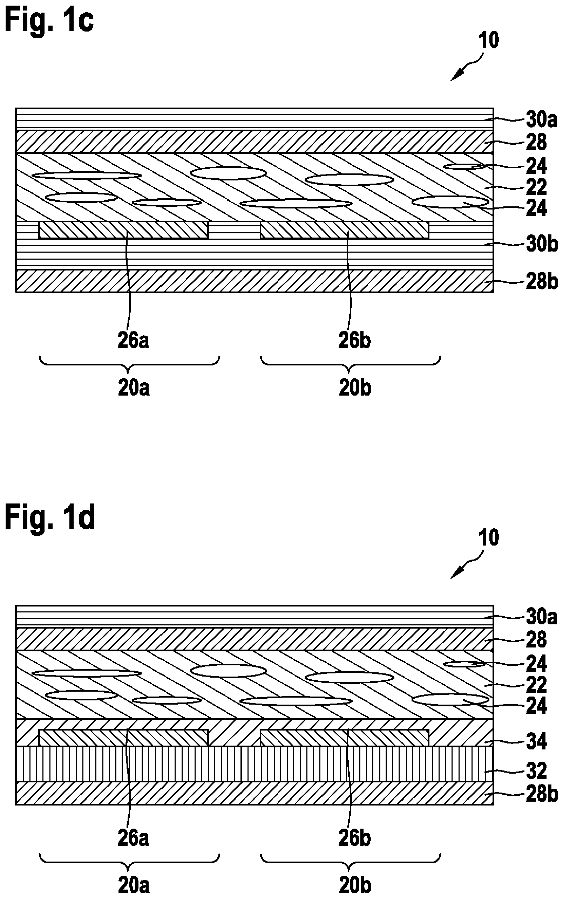

In Figur 1c ist eine weitere Ausführungsvariante des erfindungsgemäßen schallwellenbasierten Sensors 10 dargestellt. Weiterhin bezeichnen gleiche Bezugszeichen gleiche Bauteilkomponenten wie in den Figuren 1a und 1b.

Die in Figur 1c dargestellte Ausführungsvariante eines schallwellenbasierten Sensors 10 entspricht einer Weiterbildung des in Figur 1a dargestellten Sensors dahingehend, dass auf der mit der ersten Schutzschicht 30b bedeckten ersten Großfläche der Membran 22 auf der Oberfläche der Schutzfolie 30b eine weitere Masseelektrode 28b vorgesehen ist, die beispielsweise die Funktion einer elektrischen Abschirmung hat.

Eine dazu analoge Weiterbildung der in Figur 1b abgebildeten Ausführungsform ist in Figur 1d dargestellt. Auch hier bezeichnen gleiche Bezugszeichen gleiche Bauteilkomponenten wie in den Figuren 1a bis 1c.

Bei dieser Ausführungsform ist auf der Oberfläche des in Form einer Leiterplatte ausgeführten Trägers 32 eine weitere Masseelektrode 28b aufgebracht, die ebenfalls die Funktion einer Abschirmung hat.

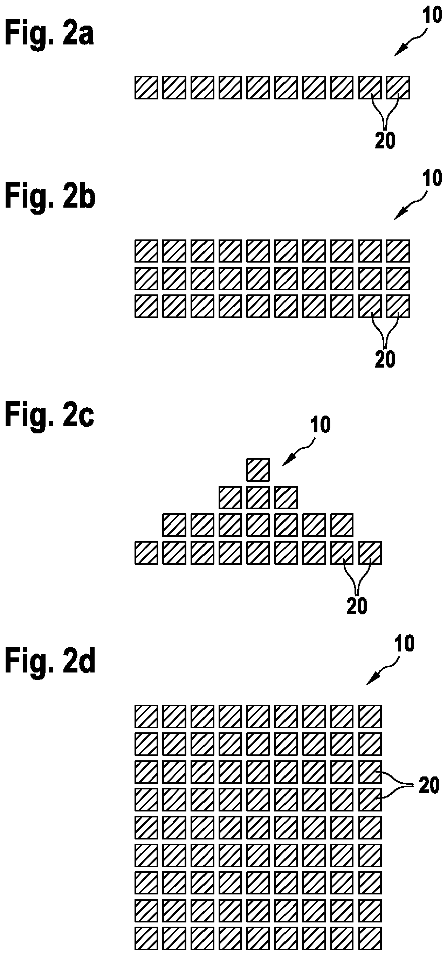

Auch wenn die in den Figuren 1a bis 1d dargestellten schallwellenbasierten Sensoren lediglich zwei Schallwandler 20a, 20b aufweisen, so ist es selbstverständlich Gegenstand der Erfindung, dass der erfindungsgemäße schallwellenbasierte Sensor auch mehr als zwei Schallwandlereinheiten umfassen kann. Derartige Ausführungsbeispiele sind Gegenstand der Figuren 2a bis 2h, wobei jeweils gleiche Bezugszeichen gleiche Bauteilkomponenten bezeichnen, wie sie auch bereits in den Figuren 1a bis 1d Verwendung gefunden haben.

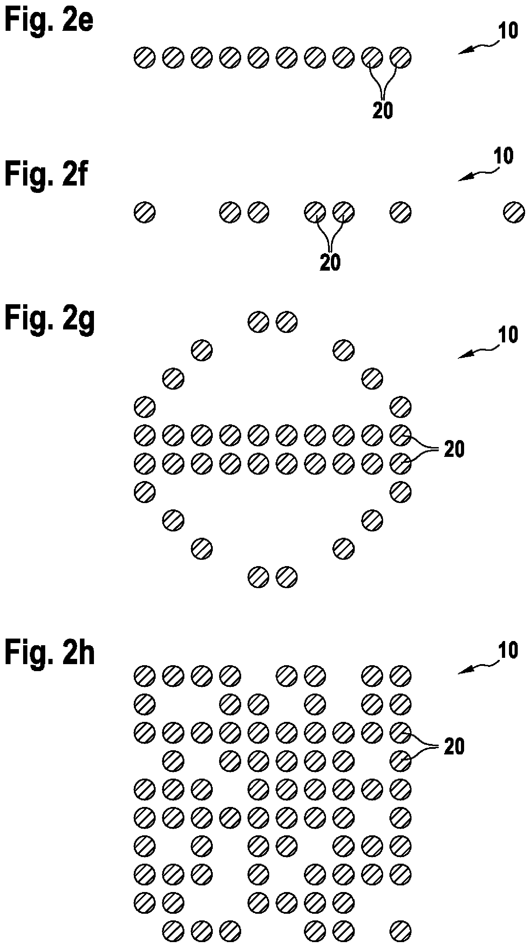

So zeigen die Figuren 2a, 2e und 2f jeweils linear angeordnete Schallwandler 20, die zusammen jeweils einen schallwellenbasierten Sensor 10 bilden. Dabei kann durch die Wahl geeigneter Elektrodengeometrien ein weitere Freiheitsgrad in der Ausgestaltung der Schallwandler 20 realisiert werden. So sind in den Figuren 2a - 2d beispielhaft Schallwandler 20 mit viereckiger Elektrodengeometrie abgebildet und in den Figuren 2e - 2h Schallwandler 20 mit runder Elektrodengeometrie. Es lassen sich jedoch auch Schallwandler 20 mit runder und mit viereckiger Elektrodengeometrie kombinieren.

Der Vorteil linear angeordneter Schallwandler unter Bildung eines den schallwellenbasierten Sensor 10 verkörpernden Sensor-Arrays besteht darin, dass auch mehrere zu detektierende Objekte in der Detektionsebene winkelabhängig genau erfasst werden können.

Demgegenüber beziehen sich die Figuren 2b bis 2d und 2g bis 2h auf zweidimensional in der Fläche angeordnete Schallwandler 20, die ein flächiges Sensor-Array eines schallwellenbasierten Sensors 10 darstellen. Diese Ausführungsformen gestatten zusätzlich zu einer winkelabhängigen Bestimmung von zu detektierenden Objekten auch eine Erfassung eines Höhenprofils, beispielsweise in Hinsicht auf die Überfahrbarkeit von Hindernissen.

Hierbei kann es sich um geometrisch geordnete Figuren wie beispielsweise in den Figuren 2b bis 2d und 2g handeln oder um Anordnungen in einer statistischen Abfolge, wie in Figur 2h. Dabei ist der Vorteil einer regelmäßigen Anordnung von Schallwandlern 20 darin zu sehen, dass neben einem angenehmen optischen Erscheindungbild auch ein gutes Signal-RauschVerhältnis erzielt werden kann und eine vereinfachte Herstellung ermöglicht wird. Der Vorteil einer statistischen Anordnung von Schallwandlern 20 besteht dagegen darin, dass bei gleicher Gesamt-Abmessung bzw. Flächenausdehnung des Sensors 10 eine geringere Anzahl von Schallwandlern 20 benötigt wird.

Wesentlich ist hierbei, dass die Anordnung aus zwei oder mehreren Schallwandlern 20 jeweils so ausgeführt ist, dass der Abstand der einzelnen Schallwandler 20 zueinander jeweils im Wesentlichen weniger als die halbe Luftschall-Wellenlänge der von den Schallwandlern 20 ausgesandten bzw. detektierten Schallwellen beträgt. Dies ist beispielsweise bei Verwendung einer Ultraschallfrequenz von beispielsweise von 50kHz, was einer Luftschall-Wellenlänge von ca. 7mm entspricht, gleichbedeutend mit einem Abstand der einzelnen Schallwandler 20 von weniger als 3,5mm zueinander. Als Abstand der Schallwandler 20 zueinander wird jeweils die Distanz zwischen dem geometrischen Mittelpunkt einer ersten Schall aussendenden bzw. detektierenden Membran 20 eines ersten Schallwandlers 20 zu einem geometrischen Mittelpunkt einer zweiten Schall aussendenden bzw. detektierenden Membran 22 eines benachbarten zweiten Schallwandlers 20 betrachtet.

Dabei ist eine Anordnung aus zwei oder mehreren Schallwandlern 20 mit einem Abstand der einzelnen Schallwandler 20 zueinander von jeweils im Wesentlichen weniger als der halben Luftschall-Wellenlänge der von den Schallwandlern 20 ausgesandten bzw. detektierten Schallwellen dahingehend zu verstehen, dass kleinere Überschreitungen dieses Abstands im Rahmen von beispielsweise 45%, vorzugsweise 30% und insbesondere 10% möglich sein können, soweit die Anwendung des Sensors 10 die dann auftretenden Mehrdeutigkeiten des Messsignals tolerieren kann. So kann bei der Bestimmung der Distanz von Umweltobjekten in Bezug auf ein Kraftfahrzeug mittels Ultraschallsensoren ein Abstand von 5 mm der Schallwandler 20 zueinander noch akzeptiert werden.

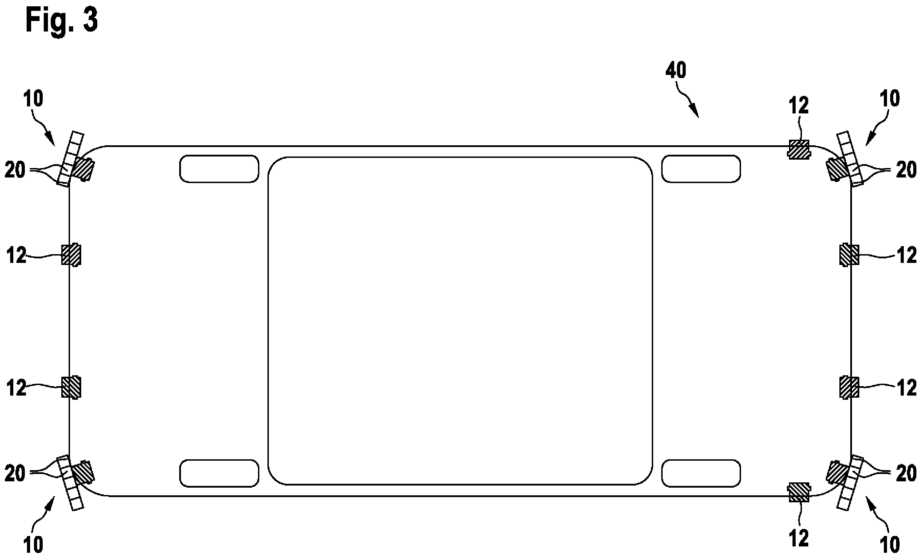

In Figur 3 ist schematisch ein Kraftfahrzeug 40 abgebildet, das an seiner Außenperipherie eine Mehrzahl von erfindungsgemäßen schallwellenbasierten Sensoren 10 umfasst. Dabei sind die erfindungsgemäßen schallwellenbasierten Sensoren 10 beispielsweise an den Außenecken des Fahrzeugs 40 befestigt, da in diesem Bereich eine winkelabhängige Bestimmung von Umgebungsgegenständen von besonderer Bedeutung ist. Weiterhin erlauben die auf Basis einer Ferroelektret-materialbasierten Membran ausgeführten schallwellenbasierten Sensoren aufgrund der Flexibilität ihrer Membran 22 eine Anpassung auch an beispielsweise nicht ebene Fahrzeugkonturen, wie sie in einem Außeneckbereich des Fahrzeugs 40 üblich sind.

Das Fahrzeug 40 kann daneben weitere schallwellenbasierte Sensoren 10 an seiner Außenperipherie aufweisen oder - wie in Figur 3 dargestellt - weitere Sensoren 12 üblicher Bauart, die bspw. als Ultraschallsensor, Lidar- oder Radarsensoren bzw. in Form von kamerabasierten Sensoren ausgeführt sind. Der besondere Vorteil einer Kombination herkömmlicher Sensoren 12 mit den erfindungsgemäßen schallwellenbasierten Sensoren 10 an der Außenperipherie eines Fahrzeugs 40 besteht darin, dass die Freiheitsgrade in der geometrischen Auslegung der jeweils vorgesehenen Sensoren 10, 12 sich den an den betreffenden Positionen anzutreffenden Fahrzeuggeometrien geeignet auswählen und anpassen lassen. Weiterhin können die Sensoren herkömmlicher Bauart 12 als Signalsender fungieren, während hingegen die erfindungsgemäßen schallwellenbasierten Sensoren 10 als Signalempfänger geschaltet sind.

Die erfindungsgemäßen schallwellenbasierten Sensoren 10 können beispielsweise eingesetzt werden zur Umfelddetektion bei Kraftfahrzeugen, insbesondere für Einparkvorgänge oder für eine semi- oder vollautomatisierte Manövrierung von Fahrzeugen bei langsamer Geschwindigkeit als auch für eine sogenannte Tote-Winkel-Überwachung (SVA). Weitere Anwendungsfelder sind in der Umfeldsensierung für Roboter beispielsweise in Form automatischer Rasenmäher, Staubsauger oder in Form von Transportrobotern beispielsweise in der industriellen Fertigung, in Krankenhäusern oder in Pflegeheimen zu sehen. Weiterhin können mittels des erfindungsgemäßen schallwellenbasierten Sensors industrielle Fertigungsprozesse und -anlagen überwacht werden. Darüber hinaus ist eine Unterstützung sehbehinderter Personen denkbar, beispielsweise indem die erfindungsgemäßen schallwellenbasierten Sensoren in Hinderniswarnern, beispielsweise in Form eines Ultraschallstocks oder eines Ultraschall-Blindenhundes eingefügt werden. Darüber hinaus ist eine Anwendung in einer geeigneten Form der Ultraschallkommunikation denkbar, beispielsweise für Fernbedienungen, oder die Anwendung im Bereich der Sicherheitstechnik, wo eine Raumüberwachung oder die Ortung eines Eindringens von Personen oder Objekten in geschützte Räume detektiert werden kann.

Dabei können die schallwellenbasierten Sensoren 10 sowohl als Schallwellensender als auch als Schallwellendetektor betrieben werden; dies schließt die Möglichkeit ein, beide Betriebsmodi in alternierender Folge vorzusehen.

Um mit dem erfindungsgemäßen schallwellenbasierten Sensor 10 neben der Entfernung zusätzlich auch die Richtung zu einem Objekt zu bestimmen, wird von mindestens einem Emitter, der ein Schallwandler 20 des selben oder eines benachbarten Sensors 10 sein kann, ein Signal gesendet, das Signal wird von einem Objekt reflektiert und das reflektierte Echo von Empfängerelementen als Eingangssignal empfangen. Aus dem Eingangssignal werden aus einem beliebigen Beamforming-Verfahren Entfernung und Richtung zu dem Objekt berechnet.

## Patentansprüche

1. Schallbasierter Sensor zur Umfelddetektion, insbesondere Ultraschallsensor für Kfz-Anwendungen, umfassend ein Array aus mindestens zwei Schallwandlern zur Erzeugung und/oder zur Detektion von Schallwellen, wobei die Schallwandler (20a, 20b) in einem Abstand von weniger als der halben Wellenlänge der erzeugten und/oder der detektierten Schallwellen zueinander positioniert sind, wobei mindestens einer der Schallwandler (20a, 20b) eine Membran (22) umfassend ein Ferroelektret-Material aufweist und das Ferroelektret-Material als Folie ausgeführt ist, die mit Elektroden (26a, 26b, 28) versehen ist, **dadurch gekennzeichnet, dass** die Folie auf einer Leiterplatte aufgeklebt ist und mindestens eine der Elektroden (26a, 26b, 28, 28b) als Leiterbahn der Leiterplatte ausgeführt ist.

2. Schallbasierter Sensor nach Anspruch 1, **dadurch gekennzeichnet, dass** die Schallwandler (20a, 20b) parallel zueinander ausgerichtet sind.

3. Schallbasierter Sensor nach Anspruch 1 oder 2, **dadurch gekennzeichnet, dass** die Membran (22) des Schallwandlers (20a, 20b) mit einer Schutzschicht (30a, 30b) aus einer Folie versehen ist.

4. Schallbasierter Sensor nach einem der Ansprüche 1 bis 3, **dadurch gekennzeichnet, dass** mindestens eine der Elektroden (26a, 26b, 28) in Form einer aufgedampften Metallisierung auf der Folie ausgeführt ist.

5. Schallbasierter Sensor nach einem der vorhergehenden Ansprüche, **dadurch gekennzeichnet, dass** die mindestens zwei Schallwandler (20a, 20b) eine gemeinsame Elektrode (28, 28b) aufweisen.

6. Kraftfahrzeug mit mindestens einem schallbasierten Sensor nach einem der vorhergehenden Ansprüche, **dadurch gekennzeichnet, dass** der mindestens eine schallbasierte Sensor (10) an der Außenecke des Kraftfahrzeuges (40) positioniert ist.

7. Kraftfahrzeug nach Anspruch 6, **dadurch gekennzeichnet, dass** zusätzlich an der Außenkante des Kraftfahrzeugs insbesondere schallbasierte Sensoren (12) positioniert sind, die nur ein sensitives Element, insbesondere Schallwandler, umfassen.

8. Verwendung eines schallbasierten Sensors nach einem der Ansprüche 1 bis 5 zur Umfelderfassung bei Robotern, bei Gebäudeüberwachungssystemen, bei Überwachungsvorrichtungen für industrielle Fertigungsanlagen oder bei Vorrichtungen zur Unterstützung sehbehinderter Personen.

## Claims

1. Sound-based sensor for detecting surroundings, in particular ultrasonic sensor for motor vehicle applications, comprising an array of at least two sound transducers for generating and/or detecting sound waves, wherein the sound transducers (20a, 20b) are positioned at a distance of less than half the wavelength of the generated and/or detected sound waves with respect to one another, wherein at least one of the sound transducers (20a, 20b) has a diaphragm (22) comprising a ferroelectretic material, and the ferroelectretic material is in the form of a film provided with electrodes (26a, 26b, 28), **characterized in that** the film is adhesively bonded to a printed circuit board and at least one of the electrodes (26a, 26b, 28, 28b) is in the form of a conductor track of the printed circuit board.

2. Sound-based sensor according to Claim 1, **characterized in that** the sound transducers (20a, 20b) are oriented parallel to one another.

3. Sound-based sensor according to Claim 1 or 2, **characterized in that** the diaphragm (22) of the sound transducer (20a, 20b) is provided with a protective layer (30a, 30b) made of a film.

4. Sound-based sensor according to one of Claims 1 to 3, **characterized in that** at least one of the electrodes (26a, 26b, 28) is in the form of a vapour-deposited metallization on the film.

5. Sound-based sensor according to one of the preceding claims, **characterized in that** the at least two sound transducers (20a, 20b) have a common electrode (28, 28b).

6. Motor vehicle having at least one sound-based sensor according to one of the preceding claims, **characterized in that** the at least one sound-based sensor (10) is positioned at the outer corner of the motor vehicle (40).

7. Motor vehicle according to Claim 6, **characterized in that** sound-based sensors (12), in particular, which comprise only one sensitive element, in particular a sound transducer, are additionally positioned on the outer edge of the motor vehicle.

8. Use of a sound-based sensor according to one of Claims 1 to 5 for capturing the surroundings in robots, in building monitoring systems, in monitoring apparatuses for industrial production plants or in apparatuses for assisting visually impaired persons.

## Revendications

1. Capteur acoustique destiné à la détection de l'environnement, en particulier capteur à ultrasons pour des applications dans des véhicules automobiles, comprenant un réseau d'au moins deux transducteurs acoustiques servant à générer et/ou détecter des ondes acoustiques, dans lequel les transducteurs acoustiques (20a, 20b) sont positionnés à une distance l'un de l'autre qui est inférieure à la moitié de la longueur d'onde des ondes acoustiques générées et/ou détectées, dans lequel au moins l'un des transducteurs acoustiques (20a, 20b) comporte une membrane (22) comprenant un matériau de type ferroélectret et le matériau de type ferroélectret est mis sous la forme d'un film muni d'électrodes (26a, 26b, 28), **caractérisé en ce que** la feuille est collée à une carte de circuit imprimé et **en ce qu'**au moins l'une des électrodes (26a, 26b, 28, 28b) est réalisée sous la forme d'une piste conductrice de la carte de circuit imprimé.

2. Capteur acoustique selon la revendication 1, **caractérisé en ce que** les transducteurs acoustiques (20a, 20b) sont orientés parallèlement les uns aux autres.

3. Capteur acoustique selon la revendication 1 ou 2, **caractérisé en ce que** la membrane (22) du transducteur acoustique (20a, 20b) est munie d'une couche de protection (30a, 30b) constituée d'un film.

4. Capteur acoustique selon l'une des revendications 1 à 3, **caractérisé en ce qu'**au moins l'une des électrodes (26a, 26b, 28) est réalisée sous la forme d'une métallisation déposée en phase vapeur sur le film.

5. Capteur acoustique selon l'une des revendications précédentes, **caractérisé en ce que** les au moins deux transducteurs acoustiques (20a, 20b) comportent une électrode commune (28, 28b).

6. Véhicule automobile comportant au moins un capteur acoustique selon l'une des revendications précédentes, **caractérisé en ce que** l'au moins un capteur acoustique (10) est positionné sur le coin extérieur du véhicule automobile (40).

7. Véhicule automobile selon la revendication 6, **caractérisé en ce que** des capteurs, notamment acoustiques (12), qui ne comprennent qu'un seul élément sensible, notamment un transducteur acoustique, sont en outre positionnés sur le bord extérieur du véhicule automobile.

8. Utilisation d'un capteur acoustique selon l'une des revendications 1 à 5 pour détecter l'environnement de robots, de systèmes de surveillance de bâtiments, de dispositifs de surveillance d'installations industrielles ou de dispositifs d'aide aux personnes souffrant de déficience visuelle.
